# EUROPÄISCHE PATENTSCHRIFT

(11) **EP 0 418 882 B1**
(45) Veröffentlichungstag und Bekanntmachung des Hinweises auf die Patenterteilung: **03.11.1993**
(21) Anmeldenummer: 90118112.3
(22) Anmeldetag: 20.09.1990
(51) Int. Cl.: B60R 16/02

(54) **Kabelbaum, insbesondere für Kraftfahrzeuge**
Wiring harness particulary for vehicles
Faisceau de câbles en particulier pour véhicules

(30) Priorität: 22.09.1989 DE 8911285 U
(43) Veröffentlichungstag der Anmeldung: 27.03.1991
(73) Patentinhaber: Leonische Drahtwerke AG, 90402 Nürnberg (DE)
(72) Erfinder: Reichinger, Gerhard, W-8540 Rednitzhembach (DE)
(74) Vertreter: Tergau, Enno, Dipl.-Ing.

(56) Entgegenhaltungen:
- EP-A- 0 235 924
- EP-A- 0 288 752
- DE-A- 3 337 596
- DE-A- 3 609 704
- DE-A- 3 616 649
- FR-A- 1 256 715

## Beschreibung

Die Erfindung betrifft einen Kabelbaum etwa der aus EP-A1-0 288 752 vorbekannten Art.

Die Systemvorteile derartiger Kabelbäume sind in der vorgenannten Druckschrift erläutert. Die Herstellung des Formkörpers durch druckloses Ausschäumen ist besonders vorteilhaft, weil bei der Formherstellung keine größeren Formkosten entstehen. Des weiteren ermöglicht dies eine höhere Packungsdichte der Einzelleitungen und ein niedriges Gewicht.

Der Erfindung liegt die Aufgabe zugrunde, einen Kabelbaum der eingangs genannten Art so auszugestalten, daß er weitere Gebrauchsvorteile gewährleistet und den Weg für weitere Konstruktionsmöglichkeiten am Einbauobjekt, z.B. am Automobil öffnet. Diese Aufgabe wird durch die Merkmale des Anspruches 1 gelöst. Dieser Lösungsweg wird durch die Merkmale der Ansprüche 2 und 3 verfeinert und verbessert. Dabei dienen die Kavitäten einerseits zur Gewichtsreduzierung bei gleichzeitiger Erhöhung der Formstabilität des Formkörpers und andererseits zur Bereitstellung von Lehrkanälen, beispielsweise zum nachträglichen Einziehen von einem Sonderzubehör oder einem Extra zugehörigen Leitungen, gegebenenfalls auch in einem Reparaturfall, wenn nicht der gesamte Kabelbaum ausgetauscht werden soll. Wenn hier von "Leitungen" gesprochen wird, müssen dies nicht zwangsläufig elektrische Leitungen sein. Vielmehr ist durchaus denkbar, daß es sich dabei auch um Leitungen für ein optisches, ein hydraulisches oder ein pneumatisches Medium o.dgl. handelt.

Die Unteransprüche betreffen weitere, im einzelnen in der Figurenbeschreibung beschriebene Ausgestaltungen des Kabelbaumes.

Der Erfindungsgegenstand wird anhand von in den Figuren dargestellten Ausführungsbeispielen näher erläutert. Es zeigen:

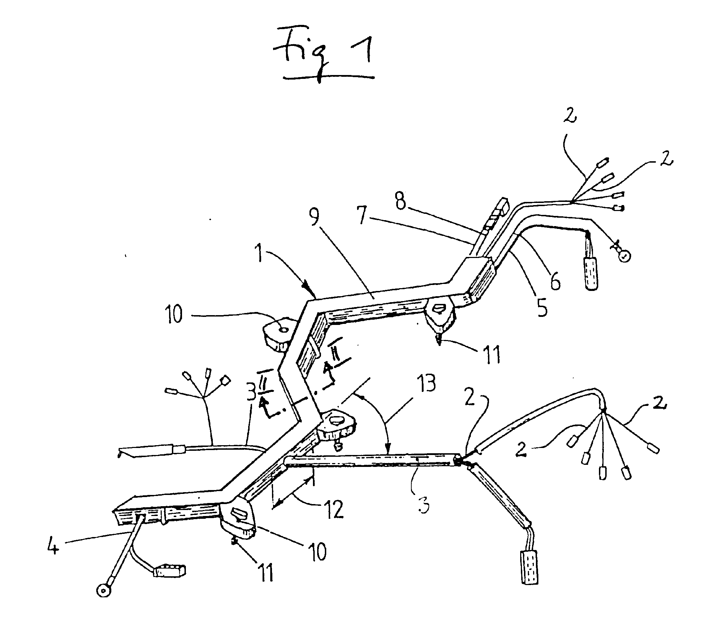

- Fig. 1: einen erfindungsgemäß ausgestalteten Kabelbaum in perspektivischer Ansicht.
- Fig. 2-7: unterschiedliche Querschnittsformen des Kabelkanals entsprechend der Schnittlinie II-II in Fig. 1.

In dem insgesamt mit 1 bezeichneten Stammbereich des Kabelbaums ist ein Vielzahl von Leitungen 2 auch unterschiedlicher Längen zusammengefaßt. Vom Stammbereich 1 stehen die Leitungen 2-8 oftmals auch ihrerseits wiederum in gebündelter, mehrere Leitungen enthaltender Form von Leitungsanschlüssen nach Art etwa von Ästen ab.

Der Stammbereich 1 ist mindestens teilweise von einem Formkörper 9 aus Vollmaterial, insbesondere aus Kunststoff, ortsfest und wasserdicht umfaßt.

Die Außenkontur des Formkörpers 9 ist zweckmäßig der Kontur der Oberflächen seines Montagebereiches am Einbauobjekt angepaßt. Der Formkörper 9 ist bereits mit vorgefertigten Schraublöchern 10 oder mit vormontierten Befestigungsschrauben 11, Nieten, Einschnappvorsprüngen, Klebeflächen o.dgl. versehen.

Im Bereich 12 z.B. der Abzweigung einer Leitung 2-8 oder eines mehrere gebündelte Leitungen 2-8 enthaltenden Leitungsanschlusses kann der Formkörper 9 so ausgebildet sein, daß die Leitung 2-8 oder der sie enthaltende, astartig vom Formkörper 9 abstehende Leitungsanschluß in einer vorbestimmten Sollrichtung, z.B. im Winkel 13 vom Stammbereich 1 bzw. vom Formkörper 9 absteht. Der Formkörper 9 kann in seinem Formkörperbereich 12 z.B. durch entsprechende Werkstoffwahl auch so ausgestaltet sein, daß die Leitungen 2-8 bzw. mehrere gebündelte Leitungen 2-8 enthaltende Leitungsanschlüsse weitgehend ungehindert, z.B. elastisch vom Formkörper 1 abbiegbar sind. Überhaupt kann, je nach den gewünschten Gegebenheiten und Forderungen des Einbauobjekts der Formkörper 9 in unterschiedlichen Bereichen aus Werkstoffen unterschiedlicher Elastizität und/oder Festigkeit gefertigt sein.

Zweckmäßig besteht der Formkörper aus einem Polyurethan(= PU)-Schaum, insbesondere aus einem schwer entflammbaren Zweikomponenten-PU, das von -40°C bis +130°C temperaturbeständig ist. Die Schaumhärte ist innerhalb desselben Formkörpers 9 variabel ausgestaltbar.

Der die Leitungen 2-8 beinhaltende, um diese herumgegossene oder insbesondere herumgeschäumte Formkörper ist als Rinne oder Wanne ausgeformt oder mit einer rinnen-, wannen-, rohr- oder kanalartig eingeformten Kavität 14 versehen. Die Kavität 14 kann sich über die gesamte Länge des Formkörpers 9, also praktisch über die maximale Länge der in ihn eingebetteten Leitungen 2-8 erstrecken. Sie kann jedoch auch durch Querrippen (nicht dargestellt) in mehrere Längenabschnitte unterteilt sein.

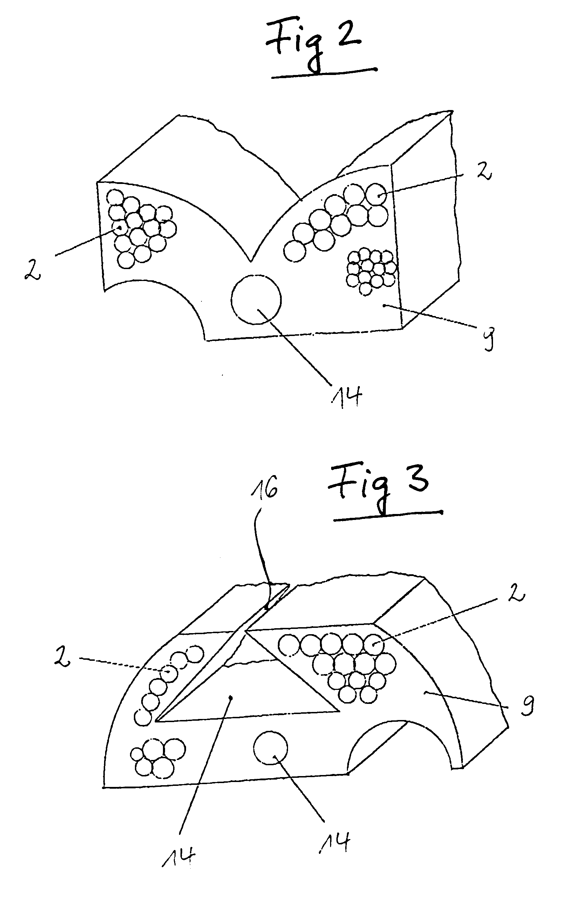

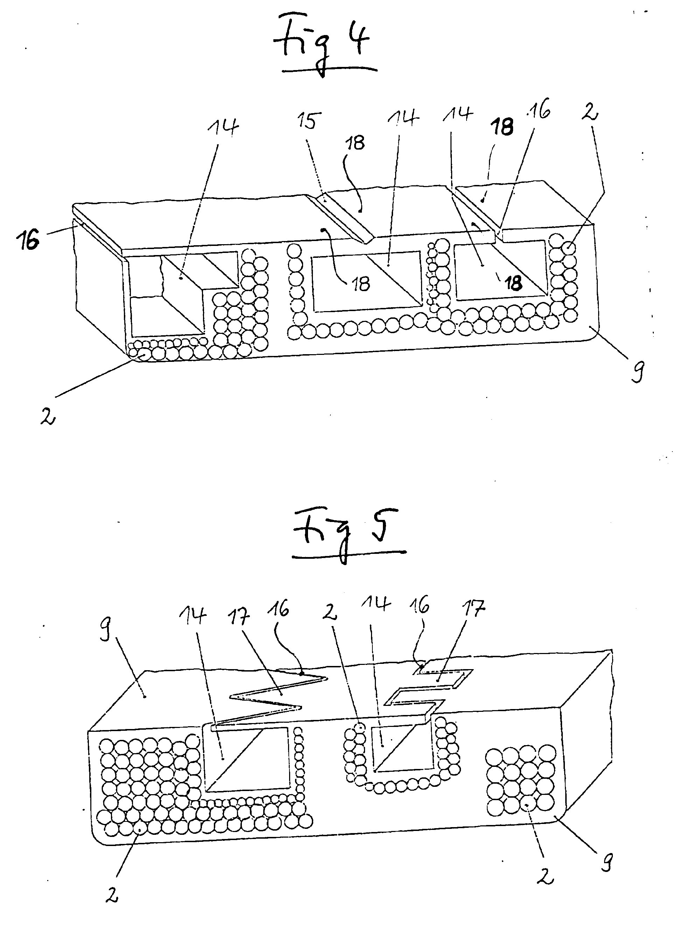

Die Kavitäten 14 können auch ringsum rohrartig zu einer Leitung geschlossen sein (u.a. Fig. 2). Dabei können sie nur an den Enden ihrer in Längsrichtung des Kabelbaumes verlaufenden Längserstreckung zur Ein- und Ausführung von Leitungen 2-8 offen sein. Es kann auch eine Gestaltung zweckmäßig sein, bei der die Kavität 14 an ihrer Außenseite mit einer insbesondere in Längsrichtung verlaufenden Markierung, z.B. auch mit einer Kerbe 15 als Sollschnittstelle versehen ist (Fig. 4). Es kann aber auch an einer Außenseite der Kavität 14 von vornherein eine im wesentlichen in Längsrichtung der prospektiven Leitungsführung verlaufende, schlitzartige Einführungsöffnung 16 vorhanden sein. Die schlitzartige Einführungsöffnung kann auch einen ungeraden, insbesondere einen zick-zack-förmigen Längsverlauf aufweisen, wie er in Fig.5 beispielsweise dargestellt ist und eine Deckverzahnung 17 für die darunterliegenden Kavitäten 14 bildet. Durch diese Deckverzahnung 17 ist eine besonders wirksame, verliersichere Halterung für eine nachträglich durch einen vorgeformten Einführungsschlitz 16 eingelegte Leitung 2-8 gewährleistet.

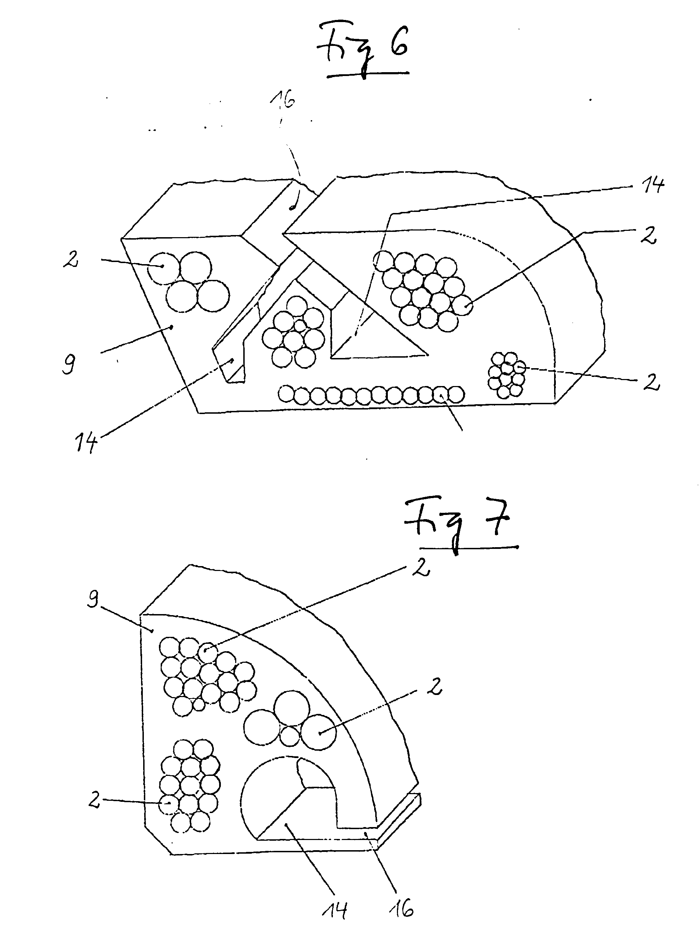

Die Kavitäten 14 dienen zur nachträglichen Einlage weiterer, individueller Leitungen 5, beispielsweise erst bei der Endmontage oder sogar erst danach in einem Reparatur- oder Ergänzungsfall. Es können auch mehrere nebeneinander verlaufende Kavitäten 14 einem einzigen Einführungsschlitz 16 zugeordnet sein (Fig. 6).

Es ist auch denkbar, Kavitäten 14 oder Einführungsschlitze 16 zu ihnen mit einem Deckel verschließbar auszugestalten, der auch fest mit dem Formkörper (9) verbindbar sein kann. Dadurch läßt sich auch die Form- bzw. Eigenstabilität des Kabelbaumes vergrößern. Der Deckel kann dabei auch mittels eines Filmscharniers einstückig mit dem Formkörper 9 verbunden sein.

Die einen Einführungsschlitz 16 zwischen sich bildenden oder die eine Kerbe 15 als Sollschnittstelle enthaltenden Formkörperteile 18 können auch aus einem Werkstoff bestehen, der eine höhere Elastizität als der übrige Formkörperwerkstoff aufweist, so daß dort elastische Lippen vorliegen. In gleicher Weise können die die Deckverzahnungen 17 bildenden Wandteile ausgestaltet sein.

### Bezugszeichenliste

- 1: Stammbereich
- 2: Leitung
- 3: Leitung
- 4: Leitung
- 5: Leitung
- 6: Leitung
- 7: Leitung
- 8: Leitung
- 9: Formkörper
- 10: Schraubloch
- 11: Befestigungsschraube
- 12: Bereich
- 13: Winkel
- 14: Kavität
- 15: Kerbe
- 16: Einführungsöffnung
- 17: Deckverzahnung
- 18: Formkörperbereich

## Patentansprüche

1. Kabelbaum für den Einbau in Kraftfahrzeugkarosserien mit einer Vielzahl von Leitungen (2-8) auch unterschiedlicher Längen, die in einem Stammbereich (1) von einem Formkörper (9) aus Kunststoff umfaßt sind, wobei der Formkörper (9) ortsfest und wasserdicht um die Leitungen (2-8) herumgespritzt, herumgeschäumt oder herumgegossen ist,
dadurch gekennzeichnet,
daß der die Leitungen (2-8) umgebende Formkörper (9) als Rinne oder Wanne ausgeformt oder mit einer rinnen-, rohr-, kanal- oder wannenartigen, beim Formen des Formkörpers eingeformten Kavität (14) versehen ist.

2. Kabelbaum nach Anspruch 1,
dadurch gekennzeichnet,
daß sich die Kavität (14) über die gesamte Länge des Formkörpers erstreckt.

3. Kabelbaum nach Anspruch 1,
dadurch gekennzeichnet,
daß die Kavität (14) durch Querrippen in eine Mehrzahl von in Längsrichtung des Formkörpers (9) verlaufende Abteilungen unterteilt ist.

4. Kabelbaum nach einem oder mehreren der vorhergehenden Ansprüche,
dadurch gekennzeichnet,
daß die Kavität (14) ringsum geschlossen ist.

5. Kabelbaum nach Anspruch 4,
dadurch gekennzeichnet,
daß die Kavität (14) nur an den Enden ihrer in Längsrichtung des Kabelbaumes verlaufenden Längserstreckung zur Ein- und Ausführung von Leitungen offen ist.

6. Kabelbaum nach einem oder mehreren der vorhergehenden Ansprüche,
dadurch gekennzeichnet,
daß er an der Außenseite der Kavität (14) mit einer insbesondere in Längsrichtung verlaufenden Markierung, z.B. mit einer Kerbe (15) als Sollschnittstelle versehen ist.

7. Kabelbaum nach einem oder mehreren der vorhergehenden Ansprüche,
dadurch gekennzeichnet,
daß er an der Außenseite der Kavität (14) mit einer insbesondere in Längsrichtung verlaufenden, schlitzartigen Einführungsöffnung (16) versehen ist.

8. Kabelbaum nach Anpruch 7,
gekennzeichnet durch
einen ungeraden, insbesondere durch einen zick-zackförmigen Längsverlauf der Einführungsöffnung (16).

9. Kabelbaum nach einem oder mehreren der vorhergehenden Ansprüche,
dadurch gekennzeichnet,
daß die Außenkontur des Formkörpers (9) der Kontur von Oberflächenbereichen seiner Montagefläche am Einbauobjekt angepaßt ist.

10. Kabelbaum nach einem oder mehreren der vorhergehenden Ansprüche,
gekennzeichnet durch
einen Formkörper aus Polyurethan-Schaum, insbesondere einem Schaum aus schwer entflammbarem Zweikomponenten-Polyurethan, welches von - 40°C bis +130°C temperaturbeständig ist.

11. Kabelbaum nach einem oder mehreren der vorhergehenden Ansprüche,
dadurch gekennzeichnet,
daß der die Leitungen umgebende Formkörper (9) und oder von ihm astartig abstehende, mehrere Leitungen (2-8) umfassende Leitungsbereiche in Sollbiegebereichen aus weichen Kunststoffen mit hoher Elastizität und in vorgefertigten Montagebereichen aus festen Kunststoffen mit geringer Elastizität gefertigt sind.

## Claims

1. A cable harness intended for installation in motor vehicle bodies with a plurality of leads (2, 8), even of different lengths, surrounded in a trunk zone (1) by a shaped body (9) made of a synthetic material, the shaped body (9) being fixed in position and watertight, being injection moulded, foamed around or cast around the leads (2, 8),
characterized in that
the shaped body (9) surrounding the leads (2, 8) is formed out as a groove or trough, or that it is provided with a groove, tube, channel or trough-type cavity (14) moulded in during the forming of the shaped body.

2. A cable harness according to claim 1,
characterized in that
the cavity (14) extends over the whole length of the shaped body.

3. A cable harness according to claim 1,
characterized in that
the cavity (14) is subdivided by transverse ribs into a plurality of compartments extending in the longitudinal direction of the shaped body (9).

4. A cable harness according to one or more of the preceding claims,
characterized in that
the cavity (14) is enclosed all round.

5. A cable harness according to claim 4,
characterized in that
the cavity (14) is only open at the ends of its longitudinal reach extending in the longitudinal direction for the introduction and extraction of any leads.

6. A cable harness according to one or more of the preceding claims,
characterized in that
it is provided at the outside of the cavity (14) with a mark extending in the longitudinal direction, for example with a notch (15), as an intended breaking point.

7. A cable harness according to one or more of the preceding claims,
characterized in that
it is provided at the outside of the cavity (14) with a slot-type insertion opening (16) extending, in particular, in the longitudinal direction.

8. A cable harness according to claim 7,
characterized by
a non linear longitudinal course, in particular by a zig-zag shaped course of the insertion opening (16).

9. A cable harness according to one or more of the preceding claims,
characterized in that
the outer contour of the shaped body (9) is adapted to the contour of surface zones of the face for assembly on the built in element.

10. A cable harness according to one or more of the preceding claims,
characterized by
a shaped body made of polyurethane foam, in particular a foam of a flame-resistant two-component polyurethane which is thermally stable from -40°C to +130°C.

11. A cable harness according to one or more of the preceding claims,
characterized in that
the shaped body (9) surrounding the leads and or lead sections projecting therefrom in the manner of branches comprising several leads (2 - 8), are made of soft synthetic materials with a high degree of elasticity in zones intended to be bent, and of rigid synthetic materials with a low degree of elasticity in prefabricated assembly zones.

## Revendications

1. Faisceau de câbles destiné à être monté dans des carrosseries de véhicules automobiles, comportant une pluralité de conducteurs (2-8) pouvant être de longueurs différentes, qui, dans un domaine formant tronc (1), sont entourés par une pièce moulée (9) en matière plastique, la pièce moulée (9) étant formée par pulvérisation, moussage ou moulage autour des conducteurs (2-8), de manière fixe en position et étanche à l'eau, caractérisé en ce que la pièce moulée (9) qui entoure les conducteurs (2-8) est sous forme d'une rigole ou d'une auge ou est munie d'une cavité (14) en forme de rigole, de tube, de canal ou d'auge, ménagée lors du moulage de la pièce moulée.

2. Faisceau de câbles selon la revendication 1, caractérisé en ce que la cavité (14) s'étend sur toute la longueur de la pièce moulée.

3. Faisceau de câbles selon la revendication 1, caractérisé en ce que la cavité (14) est subdivisée par des nervures transversales en une multiplicité de sections qui s'étendent dans la direction longitudinale de la pièce moulée (9).

4. Faisceau de câbles selon une ou plusieurs des revendications précédentes, caractérisé en ce que la cavité (14) est fermée tout autour.

5. Faisceau de câbles selon la revendication 4, caractérisé en ce que la cavité (14) n'est ouverte qu'aux extrémités de son étendue longitudinale dans la direction longitudinale du faisceau de câbles pour l'entrée et la sortie de conducteurs.

6. Faisceau de câbles selon une ou plusieurs des revendications précédentes, caractérisé en ce qu'il est muni du côté externe de la cavité (14) d'un repère qui s'étend en particulier dans la direction longitudinale, par exemple d'une encoche (15) jouant le rôle de site destiné à être coupé.

7. Faisceau de câbles selon une ou plusieurs des revendications précédentes, caractérisé en ce qu'il est muni du côté externe de la cavité (14) d'une ouverture d'introduction (16) en forme de fente qui s'étend en particulier dans la direction longitudinale.

8. Faisceau de câbles selon la revendication 7, caractérisé en ce que l'ouverture d'introduction (16) s'étend longitudinalement de manière non rectiligne, en particulier en zigzag.

9. Faisceau de câbles selon une ou plusieurs des revendications précédentes, caractérisé en ce que le contour externe de la pièce moulée (9) est adapté au contour de domaines superficiels de sa surface de montage sur l'objet sur lequel elle doit être montée.

10. Faisceau de câbles selon une ou plusieurs des revendications précédentes, caractérisé par une pièce moulée en mousse de polyuréthanne, en particulier en mousse de polyuréthanne à deux composants difficilement inflammable qui résiste aux températures de -40°C à +130°C.

11. Faisceau de câbles selon une ou plusieurs des revendications précédentes, caractérisé en ce que la pièce moulée (9) qui entoure les conducteurs et/ou les domaines de conducteurs entourant plusieurs conducteurs (2-8) et qui ressortent de la pièce moulée en forme de branches sont en matières plastiques molles de grande élasticité dans les domaines destinés à la flexion et en matières plastiques rigides de faible élasticité dans les domaines de montage préfabriqués.
